# EUROPEAN PATENT APPLICATION

(11) **EP 4 050 125 A1**
(43) Date of publication of application: **31.08.2022**
(21) Application number: 22154708.6
(22) Date of filing: 02.02.2022
(51) Int. Cl.: C25B 1/00, H02J 3/14, C25B 1/04, C25B 15/00

(54) **ENERGY MANAGEMENT APPARATUS AND ENERGY MANAGEMENT METHOD**

(30) Priority: 24.02.2021 JP 2021027918
(71) Applicant: Hitachi, Ltd., Tokyo 100-8280 (JP)
(72) Inventor: FURUTA, Futoshi, Tokyo, 100-8280 (JP); WATANABE, Keiji, Tokyo, 100-8280 (JP); ISHIKAWA, Takao, Tokyo, 100-8280 (JP); HASEGAWA, Hiroaki, Tokyo, 100-8280 (JP)
(74) Representative: MERH-IP Matias Erny Reichl Hoffmann Patentanwälte PartG mbB

(57) **Abstract**

To follow a variation in RE power and to reduce a hydrogen production cost at the time of producing hydrogen using surplus power of the RE power. According to one aspect, the present disclosure proposes an energy management apparatus which manages supply of renewable energy power to a system and an electrolytic cell 104 for production of hydrogen, and includes: a memory that stores a program for management of the supply of the power; and a processor that reads the program from the memory and executes the program. The processor executes: a process of acquiring the renewable energy power and operation information of a renewable energy device from a first-type power converter connected to the renewable energy device; a process of predicting a variation in the renewable energy power based on the renewable energy power and the operation information; a process of subtracting selling power from a prediction value of the renewable energy power to calculate a prediction value of surplus power; and a process of inputting the prediction value of the surplus power to a second-type power converter, provided on the electrolytic cell 104 side, as a command value.

## Description

### Technical Field

The present disclosure relates to an energy management apparatus and an energy management method.

### Background Art

In order to realize a low-carbon society, power generation using renewable energy (which may be referred to as "RE" hereinafter), such as sunlight and wind power, has been actively performed instead of thermal power generation using fossil fuel. However, the power generated using RE varies greatly due to natural phenomena, and thus, is not directly substitutable for system power. There is a need for an option to store power from RE using a storage battery or to convert power into hydrogen that can be stored in addition to conversion into power. Regarding the storage battery, a power storage facility and a cost thereof increase in proportion to the amount of power to be stored. On the other hand, once a conversion facility is prepared for hydrogen, a cost does not increase so much relative to the storage amount by measures such as preparing a tank and carrying hydrogen. Therefore, hydrogen is regarded as an important energy carrier when RE is utilized.

However, the cost at the time of producing hydrogen using RE is still higher than that of power generation using fossil fuel. This is because it is difficult to utilize power due to a difficulty in following a variation of electricity generated from RE and it is difficult to increase an operating rate of a hydrogen production facility due to a variation range of RE being larger than a facility capacity.

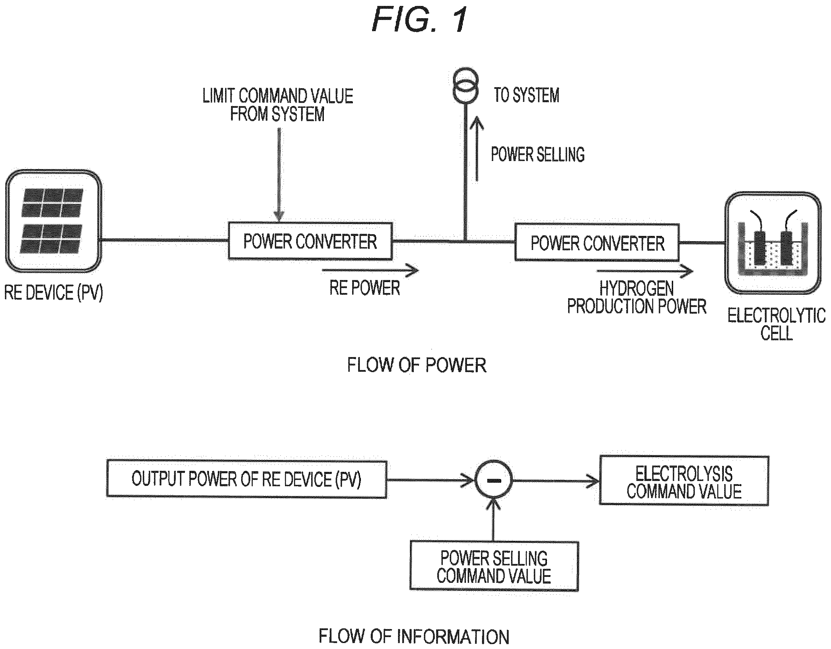

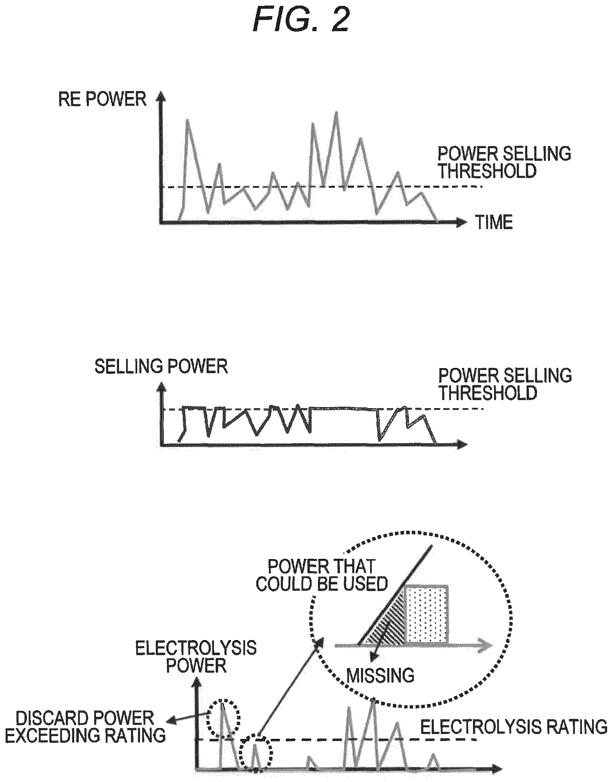

Here, a current state of a technique for producing hydrogen using RE will be described with reference to Figs. 1 and 2. Fig. 1 is a diagram illustrating a typical example of a system that obtains power from a plurality of RE devices and generates hydrogen. In addition, Fig. 2 is a view illustrating a RE usage status in the typical example of the system that generates hydrogen. Examples of the RE device include a solar cell (PV) and a wind power generator.

In Fig. 1, a power converter (such as a DC/AC converter or an AC/DC/AC converter) connected to power generation facilities (RE devices) using renewable energy generates power at an optimum (generally the maximum power) operating point of each of the RE' devices and converts the power into AC, and supplies power (which may be referred to as RE power hereinafter) using the renewable energy to a system to supplement power from fossil fuel. In addition, a part of the RE power is input to an electrolytic cell to produce hydrogen. Since the electrolytic cell operates on DC, AC power from the system is converted into DC by a dedicated power converter (AC/DC converter) and then supplied to the electrolytic cell.

Power to be applied to hydrogen production out of the power obtained from RE is the remainder obtained by subtracting power flowing through the system from the generated power. Therefore, the power converter (AC/DC converter) is controlled so as to supply only the power, obtained by subtracting a power selling amount from the RE power, to the electrolytic cell in Fig. 1.

When the power generated using RE is directly input to the power of hydrogen production, there are two problems in terms of efficiency. One is that it is difficult to follow a change in the RE power. First, it is necessary to have a capacity to receive power at various values instantaneously, such as a system, in order to extract the maximum power of RE. That is, the utilization of the maximum power of RE is achieved in a case where the power converter is connected only to the system, and is not necessarily achieved in a case where the power converter is shared with a finite load such as the electrolytic cell.

Since a conventional power converter for an electrolytic cell (AC/DC converter) serves as a constant voltage source with voltage feedback control, the amount of produced hydrogen is basically rated. Further, the power converter for an electrolytic cell switches a switch for voltage feedback control according to a variation in RE power, but the responsiveness thereof is not fast with respect to the variation in RE. Therefore, the power converter for an electrolytic cell misses a variation component in the RE power (see Fig. 2). On the other hand, when an attempt is made to stabilize a change in power to be diverted for electrolysis with the electrolytic cell as the rated operation, power flowing to the system becomes unstable then, which becomes a factor that a power limit (limit) is applied from the operation of the system (first problem).

In this regard, for example, Patent Literature 1 discloses that a surplus power status is predicted in advance based on a weather forecast or the like, and surplus power actually supplied using the prediction is separated into stable power and unstable power which are maintained constant in order to efficiently and stably produce hydrogen from the surplus power of renewable energy power generation which is likely to vary while utilizing advantages of water electrolysis cell and an SOEC (a kind of the electrolysis cell).

### Citation List

### Patent Literature

Patent Literature 1: JP 2019-173082 A

### Summary of Invention

### Technical Problem

In Patent Literature 1, however, the variation in RE power is estimated in advance from the weather prediction in order to utilize the unstable power of RE, and thus, a deviation occurs between actually generated power and a prediction value. In addition, a value, obtained by subtracting a demand amount from a power generation amount from renewable energy (RE power generation amount), is defined as the surplus power, but there is a possibility that the surplus power hardly flows through the system or is limited by the system, so that the RE power generation amount is not necessarily the maximum power. For this reason, the prediction accuracy of RE is poor, so that the problem that the response speed to the change in RE is low is still not solved.

In addition to the above problem, there is also a problem that a variation range of RE power is large and variable power is not usable well. That is, when the rating of the electrolytic cell is increased in order to utilize the surplus power to a full variation range, an operating rate, represented by a ratio of the supply power to the total amount of generated power from RE, decreases. Further, the increase in the rating leads to an increase in the scale of an electrolytic cell facility so that a hydrogen production cost increases (second problem).

In view of such circumstances, the present disclosure proposes a technique for following a variation in RE power and reducing a hydrogen production cost at the time of producing hydrogen using surplus power of the RE power.

### Solution to Problem

In order to solve the above problem, according to one aspect, the present disclosure proposes an energy management apparatus which manages supply of renewable energy power to a system and an electrolytic cell for production of hydrogen, and includes: a memory that stores a program for management of the supply of the power; and a processor that reads the program from the memory and executes the program. The processor executes: a process of acquiring the renewable energy power and operation information of a renewable energy device from a first-type power converter connected to the renewable energy device; a process of predicting a variation in the renewable energy power based on the renewable energy power and the operation information; a process of subtracting selling power from a prediction value of the renewable energy power to calculate a prediction value of surplus power; and/or a process of inputting the prediction value of the surplus power to a second-type power converter, provided on the electrolytic cell side, as a command value.

Another characteristic relating to the present disclosure will become apparent from the description of the present specification and the accompanying drawings. Further, aspects of the present disclosure are achieved and realized by elements and combinations of various elements, and the following detailed description and aspects of the appended claims. Note that the description in the present specification is merely illustrative and is not intended to limit the scope of the claims or the application of the present disclosure by no means.

### Advantageous Effects of Invention

According to the technique of the present disclosure, it is possible to follow a variation in renewable energy power and to reduce the hydrogen production cost at the time of producing hydrogen using surplus power of the RE power.

### Brief Description of Drawings

Fig. 1 is a diagram illustrating a typical example of a system that obtains power from a plurality of RE devices and generates hydrogen.
Fig. 2 is a view illustrating a RE usage status in the typical example of the system that generates hydrogen.
Fig. 3 is a diagram illustrating a configuration example of a hydrogen production system 10 according to a first embodiment.
Fig. 4 is a view illustrating a renewable energy usage status and an improvement status from the related art in the case of using the hydrogen production system according to the first embodiment, the view illustrating an increase in opportunity to operate an electrolytic cell 104 by aggregation of RE devices.
Fig. 5 is a view illustrating a renewable energy usage status and an improvement status from the related art in the case of using the hydrogen production system according to the first embodiment, the view illustrating that electrolysis power 503 is controlled by pre-reading a variation in a maximum power value.
Fig. 6 is a diagram illustrating a configuration example of a hydrogen production system 20 according to a second embodiment.
Fig. 7 is a view illustrating a renewable energy usage status in the hydrogen production system 20.
Fig. 8 is a diagram illustrating a configuration example of a hydrogen production system 30 according to a third embodiment.
Fig. 9 is a view illustrating a renewable energy usage status in the hydrogen production system 30.

### Description of Embodiments

### (1) First Embodiment

### <Configuration Example of Hydrogen Production System 10>

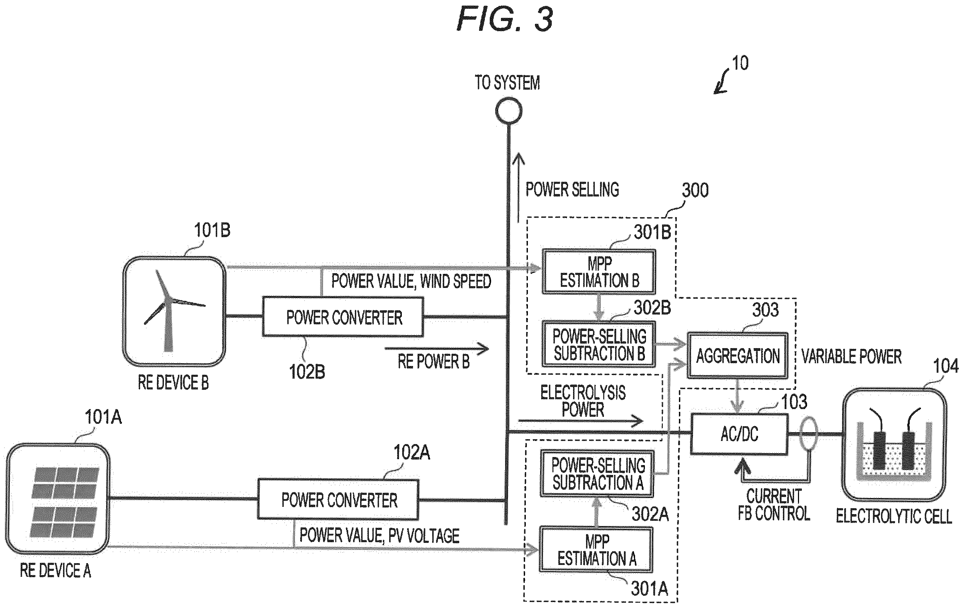

Fig. 3 is a diagram illustrating a configuration example of a hydrogen production system 10 according to a first embodiment.

The hydrogen production system 10 includes: renewable energy devices (which may be referred to as RE devices hereinafter) 101A and 101B (the number of installed devices is arbitrary); power converters 102A and 102B corresponding to the renewable energy devices; an electrolytic-cell-side power converter (AC/DC converter) 103; an electrolytic cell 104; and an energy management apparatus 300.

Examples of the RE devices A and B 101A and 101B are a power generator (solar cell: PV) using sunlight, a power generator using wind power, and the like. In Fig. 3, the RE device A 101A is a PV, and the RE device B 101B is a wind power generator.

The energy management apparatus 300 includes MPP estimation units A and B 301A and 301B, power-selling subtraction units A and B 302A and 302B, and an aggregation unit 303 to correspond to the RE devices. The energy management apparatus 300 is configured using, for example, a computer, and a processor (not illustrated) reads various processing programs from a memory (not illustrated) and develops the programs to generate the respective processing units (generate the MPP estimation units, the power-selling subtraction units, and the aggregation unit) in an internal memory of the processor.

The plurality of RE devices A and B 101A and 101B are connected to a wiring connected to a "system" through power converters 102A and 102B (power conditioners (PCS)), respectively. Here, the power converters 102A and 102B are not simple DC/AC converters or AC/DC/AC converters, which is different from the electrolytic-cell-side power converter (AC/DC converter) 103. This is because a function (MPPT: Maximum Power Point Tracking) of obtaining the maximum power from the RE devices A and B 101A and 101B connected to the power converters 102A and 102B is provided. For example, in the PV, the power converter 102A can output the maximum power to the system side in accordance with characteristics of the PV by setting an appropriate DC voltage for a certain amount of solar radiation on the PV side. Similarly, the power converter 102B can also extract the maximum power by setting an appropriate rotation speed of a wind turbine for a certain wind condition in the case of wind power generation. The power converter 102A outputs a power value by the PV and a PV voltage value to the energy management apparatus 300. The power converter 102B outputs a power value and a wind speed generated by the wind power generation to the energy management apparatus 300.

The power converters 102A and 102B are connected to the electrolytic cell 104 from the wiring connected to the "system" via the power converter (such as an AC/DC converter) 103. The power converter (AC/DC converter) 103 not only simply converts to DC but also has a current feedback control to function to send commanded power to the electrolytic cell.

The MPP estimation units A and B 301A and 301B of the energy management apparatus 300 acquire information (operation information (PV: a power value, and voltage values and current values at both ends of PV; wind power: a power value, a frequency of an AC voltage, a voltage value and a current value, a wind speed, etc.) of power output from the RE devices A and B 101A and 101B from the power converters 102A and 102B, respectively, to estimate the maximum power of each RE device (pre-read a variation in RE power). In addition, the power-selling subtraction units A and B 302A and 302B send power values, obtained by subtracting power (power selling threshold) to be sent to the system from power values supplied by the power converters 102A and 102B, to the hydrogen production side (AC/DC 103) (the AC/DC 103 extracts surplus power notified from the aggregation unit 303 (power obtained by subtracting the power selling threshold from suppliable power aggregated from the respective RE devices) from the wiring connected to the system). Note that the power converter (AC/DC converter) 103 that drives the electrolytic cell 104 can be configured to switch a voltage control-type power converter at a high speed and feedback to switch control based on a current flowing to the electrolytic cell (which is also applicable to hydrogen production systems 20 and 30 according to second and third embodiments to be described later).

If there is one RE site, each of the power-selling subtraction units A and B 302A and 302B calculates a value (surplus power) obtained by subtracting selling power (defined by the power selling threshold) from data (generated power value) from each of a plurality of RE devices and power converters existing in the site. Then, the aggregation unit 303 aggregates and adds the surplus power from each of the power-selling subtraction units A and B 302A and 302B, sends the aggregated value to the power converter (AC/DC converter) 103 of the electrolytic cell 104, and inputs the aggregated value as a power command value. Here, a method for determining power for power selling is not limited. If there is one RE site, it may be configured such that the power converters 102A and 102B connected to the respective RE devices are formed as DC/DC converters each having an MPPT function, the power converter 103 that drives the electrolytic cell is replaced with a DC/DC converter, all sides of the DC/DC converters not connected to the RE devices or the electrolytic cell are connected to a DC bus, and then, the DC bus is connected to the system via new power converter and DC/AC inverter. In addition, the hydrogen production system may be configured such that power from a plurality of RE sites (each site includes at least one RE device) is aggregated and output to the system, and electrolysis power is supplied to the electrolytic cell 104.

### <MPP Estimation (Variable Power Pre-Reading) Process Performed by MPP Estimation Units A and B 301A and 301B>

### (1) Outline of operation of energy management apparatus 300

The power converters 102A and B can obtain the maximum power as long as being connected to the system. For example, in the case of PV, the maximum power herein can be known by calculating any degree of voltage which needs to be set to enable the output of the maximum power with respect to a voltage and a current output from the solar cell when there is solar radiation. If the power converter 102A commands (sets) the RE device A 101A to operate at a predetermined voltage, the RE device A 101A outputs a current in accordance with solar radiation.

However, when there is a fixed load (for example, the electrolytic cell), whether the maximum power can be output as described above becomes a problem.

Therefore, the MPP estimation units A and B 301A and 301B of the energy management apparatus 300 acquire information on the power that is likely to be generated at the current time from the power converters (PCS) 102A and 102B, and estimate the maximum value of the maximum power and a variation thereof. Then, the power-selling subtraction units A and B 302A and 302B subtract selling power (power selling threshold) from the estimated maximum power to calculate (predict) a value of surplus power, and notify the aggregation unit 303 of the value. When the aggregation unit 303 notifies the electrolytic-cell-side power converter (AC/DC converter) 103 of the aggregated value of the surplus power, the electrolyte-side power converter (AC/DC converter) 103 extracts electrolysis power from the system.

### (ii) Operations of MPP estimation units A and B 301A and 301B

Here, estimation of the maximum power of an RE device by the solar cell (PV) will be described.

The MPP estimation unit A 301A constantly acquires information on a power value by the PV and a PV voltage value from the power converter 102A. Assuming that the operation with the maximum power is performed when power is supplied from the power converter 102A to the system at a certain point of time, the MPP estimation process is not necessary if such a state continues.

However, a maximum power value varies when there is a change in solar radiation (wind speed in the case of wind power generation). When the maximum power value varies, a voltage-power (or current) curve also changes. If power is supplied only to the system as in the related art (only power selling is performed), scanning is immediately performed in accordance with such a variation, and the maximum power value at that time is reflected in the power supplied to the system.

On the other hand, when a fixed load is connected to the power converter 102A, power is fixed (unchanged), but a PV voltage value changes. That is, an operating point varies. Therefore, the MPP estimation unit A 301A estimates a power value that can be output in accordance with a change in the PV voltage (estimates the power value by calculating a difference between the maximum power value and a power value corresponding to an operating voltage value), and sets a voltage value corresponding to the estimated maximum power value as the operating point.

### <Improvement from Related Art>

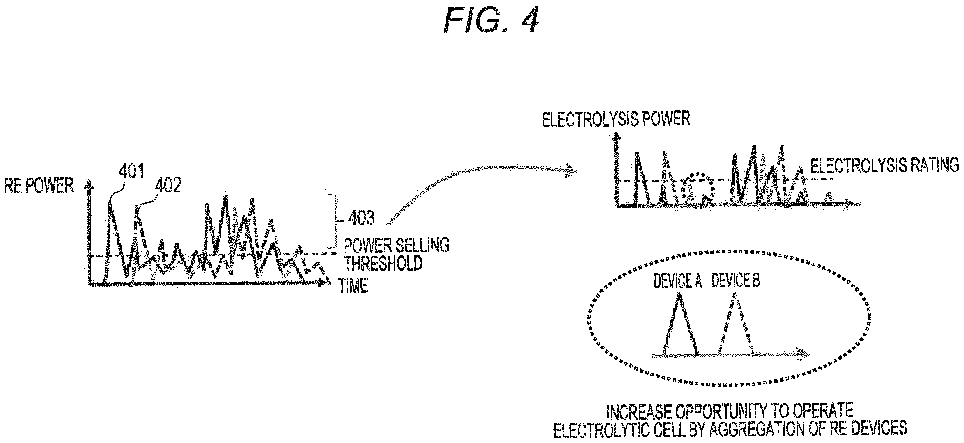

(i) Fig. 4 is a view illustrating a renewable energy usage status and an improvement status from the related art in the case of using the hydrogen production system according to the first embodiment, the view illustrating an increase in opportunity to operate the electrolytic cell 104 by aggregation of RE devices. Here, if there is no correlation (which can be said that PV and wind power have no correlation since types of renewable energy are different) with respect to the generated power between RE devices, a variation in RE is reduced at the time of aggregation. That is, there is no correlation between a variation 401 in PV power and a variation 402 in wind power as illustrated in Fig. 4. Therefore, power injected into the electrolytic cell 104 (electrolysis power 403 = surplus power) can be stabilized, and the opportunity for electrolysis increases so that an operating rate of the electrolytic cell 104 can be improved. It is important to transmit such power information on the renewable energy side to the hydrogen production side, and the electrolytic cell is driven based on rough information such as weather prediction although there is no link in the related art.

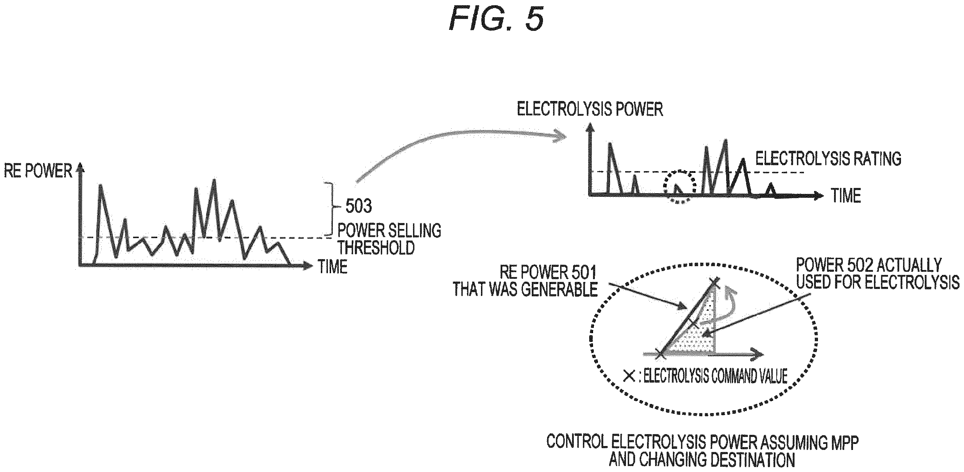

(ii) Fig. 5 is a view illustrating a renewable energy usage status and an improvement status from the related art in the case of using the hydrogen production system according to the first embodiment, the view illustrating that electrolysis power 503 is controlled by pre-reading a variation in the maximum power value. As illustrated in Fig. 5, the maximum power (MPP: RE power 501 that can be generated) is pre-read to change a power command value (power 502 actually used for electrolysis) with respect to the electrolytic cell 104 in advance. As a result, the hydrogen production system 10 can increase the followability, that is, the responsiveness with respect to the variation in RE, and can use the RE power for hydrogen production without missing. Therefore, the opportunity for electrolysis increases so that the operating rate of the electrolytic cell 104 is improved.

### (2) Second Embodiment

### <Configuration Example of Hydrogen Production System 20>

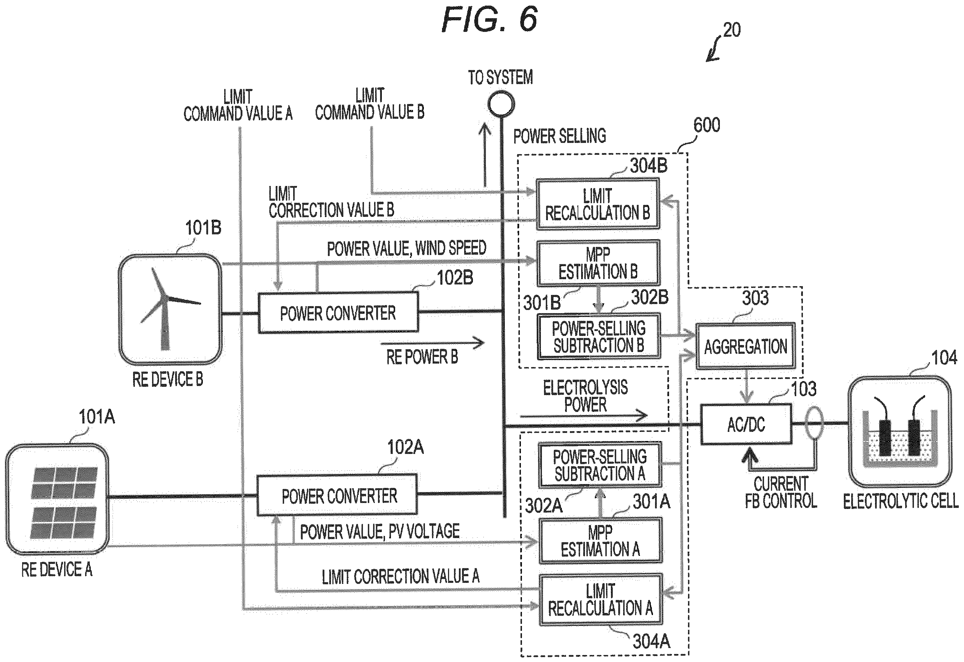

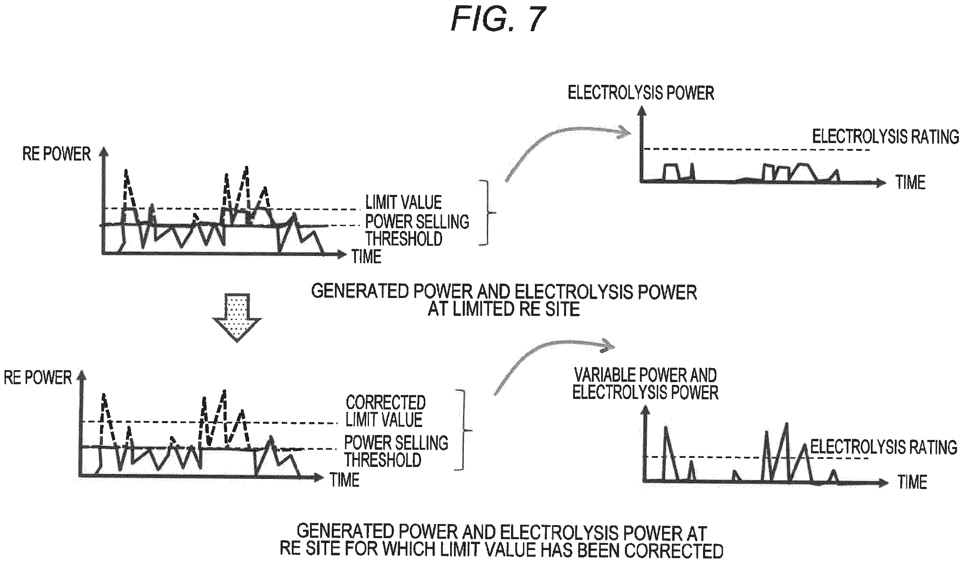

Fig. 6 is a diagram illustrating a configuration example of the hydrogen production system 20 according to the second embodiment. In addition, Fig. 7 is a view illustrating a renewable energy usage status in the hydrogen production system 20.

The hydrogen production system 20 according to the second embodiment includes substantially the same components as those of the hydrogen production system 10 according to the first embodiment, but an internal configuration of an energy management apparatus 600 is different. The energy management apparatus 600 according to the second embodiment includes the MPP estimation units A and B 301A and 301B, the power-selling subtraction units A and B 302A and 302B, the aggregation unit 303, and limit recalculation units A and B 304A and 304B to correspond to the RE devices A and B 101A and 101B. The energy management apparatus 600 is configured using, for example, a computer, and a processor (not illustrated) reads various processing programs from a memory (not illustrated) and develops the programs to generate the respective processing units (the MPP estimation units, the power-selling subtraction units, the limit recalculation units, and the aggregation unit) in an internal memory of the processor, which is similar to the energy management apparatus 300.

As illustrated in Fig. 6, the connection related to power is the same as that of the hydrogen production system 10 according to the first embodiment, and at least one RE device (for example, PV or wind power generation) is connected through the power converters 102A and 102B (power conditioners: PCS) to a wiring connected to a "system". In addition, the wiring connected to the "system" is connected to the electrolytic cell 104 via the power converter (AC/DC converter) 103 for a power command.

The power converters 102A and 102B connected to the respective RE devices A and B 101A and 101B output not only power information output to the system side but also a voltage and a current, which serve as operation information on the RE device, to the MPP estimation units A and B 301A and 302B of the energy management apparatus 600. Here, the power information is sent to the hydrogen production side as a power value obtained by subtracting power to be sent to the system. In addition, the operation information sent to the MPP estimation units A and B 301A and 301B is DC voltages and currents at both ends of PV when the RE device is the PV, and a frequency, voltage, and a current of an AC voltage when the RE device is the wind power generation.

The energy management apparatus 600 estimates a power generation status of a RE power generation site from the operation information of the RE devices A and B 101A and 101B (by the MPP estimation units A and B 301A and 301B), and commands the electrolytic cell 104 regarding power available for electrolysis (by the aggregation unit 303). In general, the RE devices A and B 101A and 101B and the power converters 102A and 102B function to output maximum power at given natural conditions.

Meanwhile, there is a case where a suppression instruction (limit command value) is transmitted for suppression to a constant power due to a constraint on the system side. In this case, the power converters 102A and 102B output only up to designated power even in a status where more power than the power (designated power) corresponding to the limit command value can be extracted from the RE devices A and B 101A and 101B as illustrated in Fig. 7. Therefore, it is sufficient that power can be utilized for hydrogen production without outputting the power (surplus power) exceeding the designated power to the system, but it is difficult to estimate the amount of electrolysis power that can be diverted to the electrolytic cell 104 only from the power information. Therefore, the electrolysis power amount can be estimated by using pieces of the operation information of the RE devices A and B 101A and 101B. If power is constant even if a DC voltage of the PV varies due to a variation of solar radiation in the case of PV, for example, it can be determined that the power is suppressed by the limit command. In addition, the suppression amount can be estimated from the voltage thereof, the suppression amount can be added to hydrogen production.

The limit recalculation units A and B 304A and 304B correct limit command values A and B based on power-selling subtraction values A and B (power values that can be diverted for hydrogen production) and the limit command values A and B, and transmit the corrected limit command values to the power converters 102A and 102B on the RE device side. The power to the system remains at a suppressed value. In this manner, operation statuses of the RE devices A and B 101A and 101B are estimated, the suppressed power is pre-read to change the power command to the electrolytic cell 104 in advance, and the limit value is corrected based on the command value. Even if there is the limit command (corrected limit value), it is possible to know the margin (reserve power in power supply) in the RE power by estimating the MPP. Therefore, the hydrogen production system 20 can enhance the followability (responsiveness) with respect to the variation in the renewable energy, and can utilize the surplus power for hydrogen production without missing the RE power and without being restricted by the limit command value from the system. It can also be seen from Fig. 7 that the surplus power can be effectively utilized by using the corrected limit value. Therefore, the opportunity for electrolysis increases so that the operating rate of the electrolytic cell is improved.

### (3) Third Embodiment

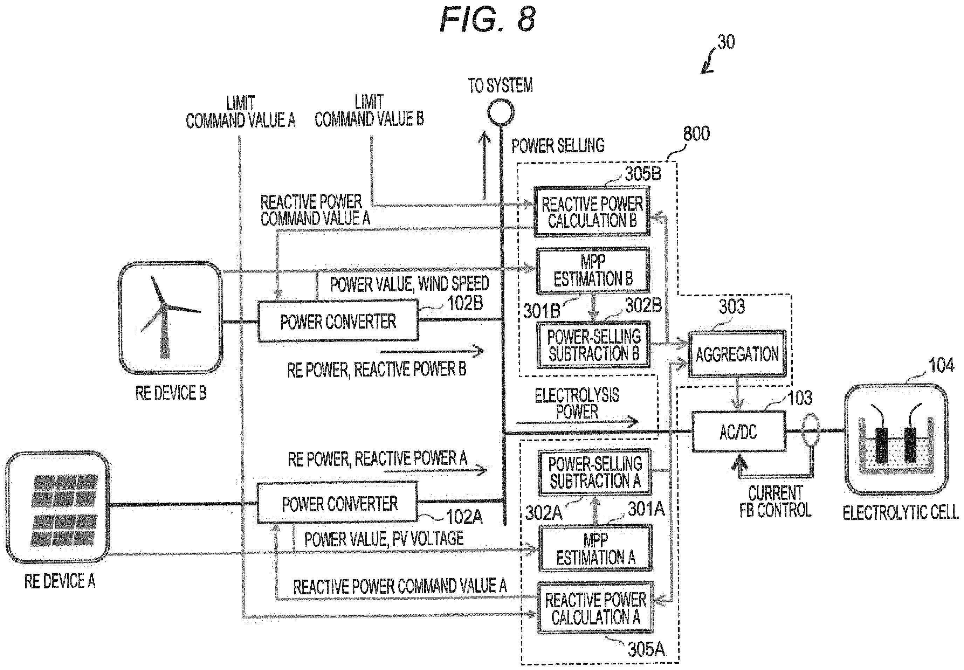

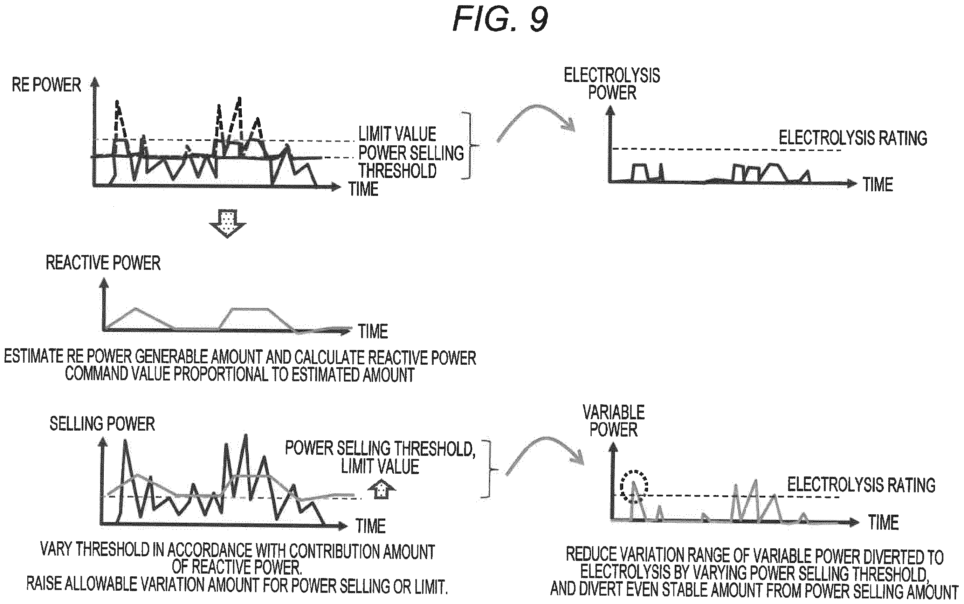

Fig. 8 is a diagram illustrating a configuration example of the hydrogen production system 30 according to the third embodiment. In addition, Fig. 9 is a view illustrating a renewable energy usage status in the hydrogen production system 30.

The hydrogen production system 30 according to the third embodiment includes substantially the same components as those of the hydrogen production system 10 according to the first embodiment, but an internal configuration of an energy management apparatus 800 is different. The energy management apparatus 800 according to the third embodiment includes the MPP estimation units A and B 301A and 301B, the power-selling subtraction units A and B 302A and 302B, the aggregation unit 303, and reactive power calculation units A and B 305A and 305B to correspond to the RE devices A and B 101A and 101B. The energy management apparatus 800 is configured using, for example, a computer, and a processor (not illustrated) reads various processing programs from a memory (not illustrated) and develops the programs to generate the respective processing units (the MPP estimation units, the power-selling subtraction units, the reactive power calculation units, and the aggregation unit) in an internal memory of the processor, which is similar to the energy management apparatus 300.

In Fig. 8, the connection related to power is similar to that of the first embodiment, and a plurality of RE devices (PV and wind power generation in Fig. 8) are connected to a wiring connected to a "system" through the power converters (power conditioners: PCS) 102A and 102B. In addition, the wiring connected to the "system" is connected to the electrolytic cell 104 via the power converter (AC/DC converter) 103 for a power command.

The energy management apparatus 800 acquires not only the power information to be output to the system side from the power converters 102A and 102B connected to the respective RE devices A and B 101A and 101B but also a voltage and a current, which serve as operation information of the RE devices A and B 102A and 102B, from the power converters 102A and 102B, send a power value, obtained by subtracting power to be sent to the system with respect to the power information, to the hydrogen production side (the power converter 103 and the electrolytic cell 104), and send the operation information to the MPP estimation units A and B 301A and 301B that estimate RE operation statuses on the hydrogen production side, which is similar to the first and second embodiments.

The MPP estimation units A and B 301A and 301B estimate power generation statuses of a RE power generation site from the operation information of the RE devices A and B 101A and 101B. Then, a selling power value is subtracted from the generated power prediction value by each of the power-selling subtraction units A and B 302A and 302B, and then, the aggregation unit 303 aggregates surplus power from each RE device and commands the power converter (AC/DC converter) 103 to supply power available for electrolysis. In general, the RE devices A and B 101A and 101B and the power converters 102A and 102B function to output maximum power at given natural conditions.

Meanwhile, there is a case where a suppression instruction (limit command) is issued for suppression to a constant power due to a constraint on the system side. In this case, the power converters (PCS) 102A and 102B output only up to designated power (value corresponding to a limit command value) even in a status where more power can be extracted from the RE devices A and B 101A and 101B. An exemplary factor thereof is a voltage variation (mainly rise) at a system connection point caused by power flowing from the RE devices A and B 101A and 101B to the system. Therefore, the voltage variation (rise) is reduced by contributing reactive power from the same power converters A and B 102A and 102B to the system, and the suppressed amount (surplus power generated by the suppression) can be used on the electrolytic cell side in the present embodiment. Such a method is advantageous when it is essential that there is a system between the RE device side and the hydrogen production side. This is because it is difficult to divert the power corresponding to the suppression amount for the hydrogen production if the voltage causing the limitation is suppressed to release the limitation even though it is known that the RE devices A and B 101A and 101B are in an output-limit state in the third embodiment, which is different from the second embodiment (the case of modifying the designated limit value)

For example, when detecting that the supply power to the system is constant even though a DC voltage of PV varies due to a variation in the solar radiation, the MPP estimation unit A 301A can determine that the supply power is suppressed by the limit command. Therefore, the reactive power calculation unit A 305A performs control such that a reactive power command value A is output to the power converter 102A, and the power converter (PCS) 102A outputs the reactive power to the system in accordance with the suppression power. As a result, the voltage at the system connection point can be reduced, and then, the suppressed power is output to the hydrogen production side. The same applies to the case of wind power (the case of the RE device B 102B).

As described above, operation statuses of the RE devices A and B 101A and 101B are estimated to perform pre-reading of the suppressed power (by the MPP estimation units A and B 301A and 301B), and a power command to the electrolytic cell 104 is changed in advance (by the aggregation unit 303) at the same time as the reactive power is output to the system (by the reactive power calculation units A and B 305A and 305B) in the third embodiment. As a result, the hydrogen production system 30 can enhance the followability (that is, responsiveness) with respect to the variation in the renewable energy and can use the RE power for hydrogen production without missing. In addition, a variation amount is output to the system by mitigating the limit command value while corresponding to the limit command from the system (by outputting reactive power to the system), and a variation range of power of the electrolytic cell 104 can be reduced accordingly and used for the hydrogen production. Therefore, the opportunity for electrolysis increases, and the operating rate of the electrolytic cell 104 can be improved.

### (6) Summary

(i) According to the first embodiment, the energy management apparatus manages supply of renewable energy power to a system and to an electrolytic cell for production of hydrogen. The energy management apparatus is configured using a general computer, and includes, for example, a memory that stores a program for management of power supply and a processor that reads the program from the memory and executes the program. The processor executes: a process of acquiring the RE power and operation information of a renewable energy device from a power converter (first-type power converter: PCS) connected to the RE device (process performed by the MPP estimation unit); a process of predicting a variation in the RE power based on the RE power and the operation information (process performed by the MPP estimation unit); a process of subtracting selling power from a prediction value of the RE power to calculate a prediction value of surplus power (process performed by the power-selling subtraction unit); and a process of inputting the prediction value of the surplus power, as a command value, to a power converter (second-type power converter: AC/DC converter) provided on the electrolytic cell side (process performed by the aggregation unit in a case where a plurality of RE devices are provided, or process performed by the power-selling subtraction unit in a case where the single RE device is provided). In this manner, the variation in the RE power is predicted based on the information from the power converter on the RE side, and a value of the electrolysis power to be acquired (extracted) from the wiring connected to the system by the power converter (AC/DC converter) on the electrolytic cell side is determined (commanded) based on the variation prediction value. As a result, the followability (responsiveness) with respect to the RE variation can be enhanced during hydrogen production. Since the RE power can be efficiently used for the hydrogen production (without missing the surplus power), the operating rate of the electrolytic cell can be increased. Note that the operation information used for the MPP estimation is information on DC voltages and currents at both ends of a solar cell when the RE device is a solar power generator, and is information on a frequency, a voltage, and a current of an AC voltage when the RE device is a wind power generator.
(ii) In the second embodiment, the energy management apparatus corrects the limit command value received from the system based on the prediction value of the surplus power obtained by the power-selling subtraction unit to calculate a limit correction value, and supplies the limit correction value to the power converter on the RE side. The power converter (PCS) on the RE side suppresses power to be output in accordance with the limit correction value. The surplus power that has been increased by correcting the limit command value can be supplied to the electrolytic cell side as the electrolysis power, and the operating rate of the electrolytic cell can be increased while enhancing the followability (responsiveness) with respect to the Re variation.
(iii) In the third embodiment, the energy management apparatus converts a limit command value received from the system into a reactive power command value based on the prediction value of the surplus power obtained by the power-selling subtraction unit, and supplies the reactive power command value to the power converter on the RE side. The power converter (PCS) on the RE side outputs reactive power together with active power to the system in response to the reactive power command value. Since the reactive power is output, a voltage at a system connection point can be lowered, and the output power can be suppressed. The suppressed power (suppression power) is supplied to the electrolytic cell side as the electrolysis power. In this manner, the suppression power corresponding to the limit command is set as the surplus power and supplied as the electrolysis power to the electrolytic cell side, and thus, it is possible to enhance the operating rate of the electrolytic cell while enhancing the followability (responsiveness) with respect to the RE variation. Features, components and specific details of the structures of the above described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

### Reference Signs List

- 10, 20, 30: hydrogen production system
- 101A: RE device A
- 101B: RE device B
- 102A and 102B: power converter (PCS)
- 103: power converter (AC/DC converter)
- 104: electrolytic cell
- 300, 600, 800: energy management apparatus
- 301A: MPP estimation unit A
- 301B: MPP estimation unit B
- 302A: power-selling subtraction unit A
- 302B: power-selling subtraction unit B
- 303: aggregation unit
- 304A: limit recalculation unit A
- 304B: limit recalculation unit B
- 305A: reactive power calculation unit A
- 305B: reactive power calculation unit B

## Claims

1. An energy management apparatus that manages supply of renewable energy power to a system and an electrolytic cell (104) for production of hydrogen, the energy management apparatus (300) comprising:
a memory that stores a program for management of the supply of the renewable energy power; and
a processor that reads the program from the memory and executes the program, **characterized in that**
the processor executes:
a process of acquiring the renewable energy power and operation information of a renewable energy device from a first-type power converter connected to the renewable energy device;
a process of predicting a variation in the renewable energy power based on the renewable energy power and the operation information;
a process of subtracting selling power from a prediction value of the renewable energy power to calculate a prediction value of surplus power; and
a process of inputting the prediction value of the surplus power to a second-type power converter, configured for the electrolytic cell (104), as a command value.

2. The energy management apparatus according to claim 1, **characterized in that**
the operation information is information on DC voltages and currents at both ends of a solar cell when the renewable energy device is a solar power generator, and is information on a frequency, a voltage, and a current of an AC voltage when the renewable energy device is a wind power generator.

3. The energy management apparatus according to claim 1 or 2, **characterized in that**
when there is a plurality of the renewable energy devices, the processor aggregates prediction values of the surplus power of the renewable energy power generated by the plurality of renewable energy devices, and inputs the aggregated prediction value to the second-type power converter as the command value.

4. The energy management apparatus according to at least on of claims 1 to 3, **characterized in that**
the processor further corrects a limit command value received from the system based on the prediction value of the surplus power to calculate a limit correction value, and supplies the limit correction value to the first-type power converter.

5. The energy management apparatus according to at least one of claims 1 to 4, **characterized in that**
the processor further converts a limit command value received from the system into a reactive power command value based on the prediction value of the surplus power, and supplies the reactive power command value to the first-type power converter.

6. An energy management method by which an energy management apparatus manages supply of renewable energy power to a system and an electrolytic cell (104) for production of hydrogen, the energy management method comprising:
acquiring, by the energy management apparatus, the renewable energy power and operation information of a. renewable energy device from a first-type power converter connected to the renewable energy device;
predicting, by the energy management apparatus, a variation in the renewable energy power based on the renewable energy power and the operation information;
subtracting, by the energy management apparatus, selling power from a prediction value of the renewable energy power to calculate a prediction value of surplus power; and
inputting, by the energy management apparatus, the prediction value of the surplus power to a second-type power converter, configured for the electrolytic cell (104), as a command value.

7. The energy management method according to claim 6, **characterized in that**
the operation information is information on DC voltages and currents at both ends of a solar cell when the renewable energy device is a solar power generator, and is information on a frequency, a voltage, and a current of an AC voltage when the renewable energy device is a wind power generator.

8. The energy management method according to claim 6 or 7, **characterized in that**
when there is a plurality of the renewable energy devices, the energy management apparatus aggregates prediction values of the surplus power of the renewable energy power generated by the plurality of renewable energy devices, and inputs the aggregated prediction value to the second-type power converter as the command value.

9. The energy management method according to at least one of claims 6 to 8, further comprising
correcting, by the energy management apparatus, a limit command value received from the system based on the prediction value of the surplus power to calculate a limit correction value, and supplying the limit correction value to the first-type power converter.

10. The energy management method according to at least one of claims 6 to 9, further comprising
converting, by the energy management apparatus, a limit command value received from the system into a reactive power command value based on the prediction value of the surplus power, and supplying the reactive power command value to the first-type power converter.
